# EUROPEAN PATENT APPLICATION

(11) **EP 4 354 121 A1**
(43) Date of publication of application: **17.04.2024**
(21) Application number: 22820092.9
(22) Date of filing: 31.05.2022
(51) Int. Cl.: G01N 21/88, G06T 7/00

(54) **INFORMATION PROCESSING DEVICE, INFORMATION PROCESSING METHOD, AND PROGRAM**

(30) Priority: 08.06.2021 JP 2021095611
(71) Applicant: CANON KABUSHIKI KAISHA, Tokyo 146-8501 (JP)
(72) Inventor: SHIMIZU Tomoyuki, Tokyo 146-8501 (JP)
(74) Representative: Canon Europe Limited
(86) International application number: PCT/JP2022/022079
(87) International publication number: WO 2022/259910

(57) **Abstract**

In a system that determines degradation or a damage in a member or a structure from an image, in a case where a determination result on a degree of damage of a determination target and known prior information about determination of the degree of damage are compared with each other to determine whether a user needs to check the determination result. In a case where it is determined that checking by the user is required, information about contents of the comparison is presented to the user as auxiliary information related to checking work.

## Description

### Technical Field

The present invention relates to an information processing apparatus, an information processing method, and a program.

### Background Art

In recent years, along with ongoing deterioration of social infrastructure, such as tunnels and bridges, the load of maintenance and inspection work has been increasing. The conventional maintenance and inspection work has been carried out in such a manner that inspection workers go to a site, such as a tunnel or a bridge, and visually check the site using expert knowledge. In recent years, the number of workers that have expert knowledge and are capable of conducting an inspection is much less than the number of targets to be inspected, and this may cause an increase in the load of maintenance and inspection work.

Meanwhile, there are image processing techniques for determining types and states of objects in images with high accuracy by learning (optimizing) parameters of a multi-layered convolutional neural network (hereinafter referred to as CNN) using a large amount of ground truth image data. It is also known that sufficient development of training leads to achieving a determination accuracy that surpasses human-level accuracy, and the image processing techniques have been widely used over various fields using images. There have been increasing attempts to apply such image processing techniques to the maintenance and inspection work of the social infrastructure. Specifically, it has been studied that, by capturing images of the appearance of a structure, such as a bridge or a tunnel, in advance and applying the above-described image processing to the captured images, any defect portions, such as cracks and water leakage, in the appearance are detected and the degree of damage is determined. Japanese Patent Application Laid-Open No. 2019-200512 discusses a technique for detecting defect portions.

The on-site workers are not required to have special skills, unlike the conventional workers, and are only required to capture images, and the determination processing can be automated by image processing, thus the maintenance and inspection work of the social infrastructure can be efficiently conducted by making good use of this processing.

### Citation List

### Patent Literature

PTL 1: Japanese Patent Application Laid-Open No. 2019-200512

### Summary of Invention

### Technical Problem

However, since the structures can degrade or be damaged in various ways depending on the constituting members, installation environment, intended use, and the like, it is difficult to prepare a large amount of exhaustive ground truth data that is important to apply the above-described image processing techniques. Accurate results cannot be output for those images that are greatly deviated from training data, which may result in an erroneous determination, so that a user needs to check and correct the automated determination results in many cases.

Further, as the performance of calculators is improving on a daily basis and this allows a larger number of images to be processed, the user's checking and correction work is increasing accordingly as described above. Therefore, throughput in a case where the image processing techniques are used for maintenance and inspection of social infrastructure cannot be sufficiently improved due to an increase in the checking and correction work.

### Solution to Problem

In view of the above-described issues, the present invention is directed to efficiently achieving maintenance and inspection work by image processing techniques and checking and correction work by a user.

An information processing apparatus according to the present invention includes an image acquisition unit configured to acquire an image of a determination target, a degree-of-damage determination unit configured to determine a degree of damage of the determination target from the image of the determination target, a prior information acquisition unit configured to acquire at least one of prior information about determination by the degree-of-damage determination unit and prior information about the determination target, a result determination unit configured to determine whether a user of an output device needs to check the determination result by comparing the determination result from the degree-of-damage determination unit with the at least one prior information, and an output generation unit configured to generate, in a case where the result determination unit determines that the user needs to check the determination result, auxiliary information to assist the user in checking based on the compared information, and output the auxiliary information to the output device.

### Advantageous Effects of Invention

According to the above-described exemplary embodiments, it is possible to efficiently achieve maintenance and inspection work by image processing techniques and checking and correction work by a user.

### Brief Description of Drawings

[Fig. 1] Fig. 1 is a block diagram illustrating a hardware configuration example of an information processing apparatus.
[Fig. 2] Fig. 2 is a block diagram illustrating a functional configuration example of the information processing apparatus.
[Fig. 3] Fig. 3 is a flowchart illustrating an example of a processing procedure for the information processing apparatus.
[Fig. 4A] Fig. 4Ais a diagram illustrating an outline of a degree-of-damage determination result and an important class boundary.
[Fig. 4B] Fig. 4B is a diagram illustrating an outline of a degree-of-damage determination result and an important class boundary.
[Fig. 4C] Fig. 4C is a diagram illustrating an outline of a degree-of-damage determination result and an important class boundary.
[Fig. 5] Fig. 5 is a graph illustrating an example of presenting auxiliary information.
[Fig. 6] Fig. 6 is a diagram illustrating an example of presenting auxiliary information.
[Fig. 7] Fig. 7 is a graph illustrating an example of presenting auxiliary information.
[Fig. 8A] Fig. 8A is a diagram illustrating an example of presenting patches in which inconsistency is detected.
[Fig. 8B] Fig. 8B is a diagram illustrating an example of presenting patches in which inconsistency is detected.
[Fig. 9A] Fig. 9A is a graph illustrating an example of presenting an initial value of a degree of damage.
[Fig. 9B] Fig. 9B is a graph illustrating an example of presenting an initial value of a degree of damage.
[Fig. 10A] Fig. 10A is a diagram illustrating a display example of comparison between a previous determination target and a current determination target.
[Fig. 10B] Fig. 10B is a diagram illustrating a display example of comparison between a previous determination target and a current determination target.
[Fig. 11] Fig. 11 is a diagram illustrating an example of an image captured to include determination targets.
[Fig. 12] Fig. 12 is a diagram illustrating an example of an image obtained by clipping determination target areas at the same position and with the same size.
[Fig. 13] Fig. 13 is a block diagram illustrating a functional configuration example of an information processing apparatus according to a third exemplary embodiment. Description of Embodiments

Modes for carrying out the present invention will be described below with reference to the accompanying drawings. Note that the following exemplary embodiments are specific examples in a case of carrying out the present invention, and are each one of specific exemplary embodiments of the configurations recited in the claims.

### (First Exemplary Embodiment)

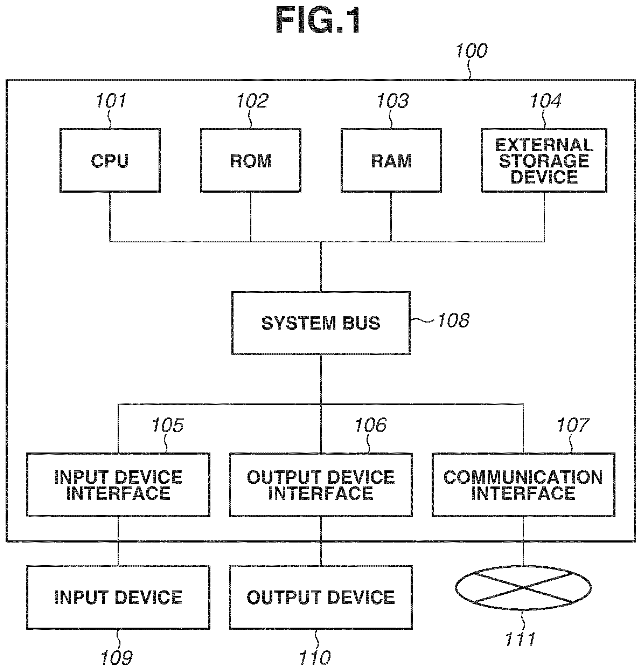

A hardware configuration of an information processing apparatus according to the present exemplary embodiment of the present invention will be described with reference to a block diagram of Fig. 1. The information processing apparatus according to the present exemplary embodiment is implemented by a single computer apparatus, but instead may be implemented by distributing its functions to a plurality of computer apparatuses as needed. In a case where a plurality of computer apparatuses is included, the plurality of computer apparatuses is connected via a local area network (LAN) or the like so that the computer apparatuses can communicate with each other.

In Fig. 1, an information processing apparatus 100 is implemented by a single computer apparatus, and includes a central processing unit (CPU) 101, a read-only memory (ROM) 102, a random access memory (RAM) 103, an external storage device 104, an input device interface 105, an output device interface 106, a communication interface 107, and a system bus 108.

The CPU 101 controls the entirety of the information processing apparatus 100. The ROM 102 stores programs and parameters that do not need to be changed. The RAM 103 temporarily stores programs and data supplied from an external apparatus or the like.

The external storage device 104 is a storage device, including a hard disk or a memory card installed in a fixed manner on the information processing apparatus 100, an optical disk, such as a compact disc (CD), a magnetic or optical card, an integrated circuit (IC) card, and a memory card, which are attached to and detachable from the information processing apparatus 100.

The input device interface 105 is an interface with an input device 109, such as a pointing device or a keyboard, which receives a user operation and inputs data. The output device interface 106 is an interface with an output device 110, such as a monitor, which is to output data held in the information processing apparatus 100, supplied data, and program execution results. The communication interface 107 is a communication interface for connecting to a network 111 such as a wireless local area network (WAN) or LAN. The system bus 108 connects the components of the information processing apparatus 100 so that the components can communicate with each other.

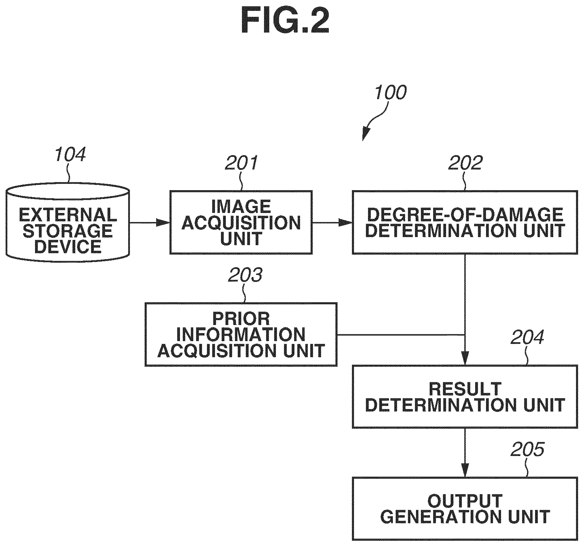

Next, a functional configuration of the information processing apparatus according to the present exemplary embodiment will be described with reference to a block diagram of Fig. 2. The information processing apparatus 100 includes an image acquisition unit 201, a degree-of-damage determination unit 202, a prior information acquisition unit 203, a result determination unit 204, and an output generation unit 205.

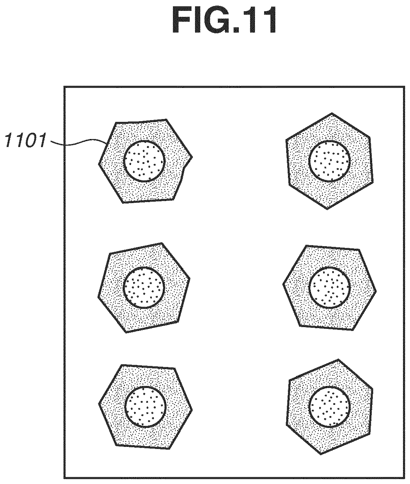

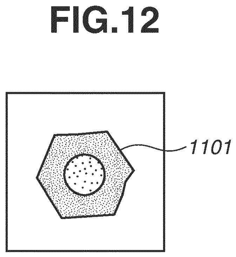

A degree-of-damage determination target (hereinafter, also simply referred to as a determination target) according to the present exemplary embodiment will now be described with reference to Figs. 11 and 12. In the present exemplary embodiment, a case where bolts in a bridge, a tunnel, or the like to be inspected are set as the degree-of-image determination target is described as an example. A large number of bolts are used in bridges, tunnels, or the like generally. Fig. 11 illustrates an example of a captured image of some of the bolts. Assume that an on-site worker captures images of the entire area while gradually shifting an image capturing range so that the images include all bolts in the bridge or tunnel to be inspected. Thus, a large number of images as illustrated in Fig. 11 are captured.

In the present exemplary embodiment, respective images of the bolts as determination targets are further created by clipping them from the thus-obtained image illustrated in Fig. 11. Fig. 12 illustrates an example of a clipped image of a bolt 1101 that is included in the image illustrated in Fig. 11. The images are clipped substantially in the same size such that the bolts as determination targets are each located approximately at the center as illustrated in Fig. 12. It is generally known that the use of input images that are normalized in position and size as illustrated in Fig. 12 makes it possible to improve the accuracy of determination by image processing. For this reason, also in the present exemplary embodiment, images are clipped out in advance, and the images are sequentially stored and managed in the external storage device 104 as degree-of-damage determination target images (hereinafter, also referred to as images to be determined).

Thus, based on the assumption that a large number of images to be determined are stored and managed in the external storage device 104, the degree-of-damage determination on each determination target is performed in the functional configuration illustrated in Fig. 2.

Next, each function unit will be described.

The image acquisition unit 201 acquires an image to be determined from the external storage device 104. In the present exemplary embodiment, as described above, members, such as bolts, are degree-of-damage determination targets, and a clipped image of each determination target that is created in advance is acquired. However, the present exemplary embodiment is not limited to this example and may have a configuration in which an image including a plurality of members as illustrated in Fig. 11 is acquired and the degree-of-damage determination unit 202 to be described below internally performs processing of detecting and clipping each member, such as the bolt 1101, to thereby determine the degree of damage of each member. In this case, the images acquired here need not necessarily be images clipped in advance.

The degree-of-damage determination unit 202 performs the degree-of-damage determination on the image to be determined acquired by the image acquisition unit 201, and outputs a degree-of-damage determination result (hereinafter, also simply referred to as a determination result). The degree-of-damage determination may be performed in such a manner that, for example, a large amount of training image data to which a ground truth degree of damage is attached is prepared and a multiclass classifier using a model formed of a multi-layered neural network is trained in advance. As the multi-layered neural network model, a known multi-layered convolutional neural network (CNN) network, such as visual geometry group (VGG) or ResNet, may be used. However, the model is not particularly limited to the CNN, as long as an image can be used an input and the degree-of-damage determination result to be used by the result determination unit 204 to be described below can be output.

Further, in the present exemplary embodiment, the degree of damage is classified into three classes A to C. Assume that "A" indicates the highest degree of damage and "C" indicates the lowest degree of damage. In training the CNN model as described above, there is known a method of training an output layer to output a likelihood distribution of classes. This method using a cross-entropy loss as a loss function is a typical multiclass classification method using a CNN, and a configuration conforming to the method is also used in the present exemplary embodiment.

The prior information acquisition unit 203 acquires known prior information about the degree-of-damage determination target or the determination result. In the present exemplary embodiment, information about a location of an important class boundary when the degree-of-damage determination unit 202 performs multiclass determination, and threshold information about a likelihood difference on the class boundary (hereinafter, these pieces of information are collectively referred to as important class boundary information) are used as prior information. As described below, the threshold information is used to determine whether there is a difference that is equal to or greater than a threshold between two classes on the important class boundary. In such ordered classes like the degree of damage, in an example where it is difficult to determine the difference between adjacent classes, the likelihood difference tends to be small. It can be said that it is unclear which one of the adjacent classes is the ground truth, which leads to an increase in the need for a user' checking.

Further, the important class boundary information may vary depending on, for example, the user's intended use of the degree-of-damage determination result. Since the important class boundary information may vary depending on the intended use, for example, a case where the class boundary and the threshold are used to determine whether to re-examine the maintenance and inspection, or a case where the class boundary and the threshold are used to determine whether there is responsibility for filling in a report, the important class boundary information can be sequentially set depending on the intended use. Further, the prior information may be preliminarily stored in a storage device such as the ROM 102, the RAM 103 or the external storage device 104; alternatively, when the prior information is used, the user may input the prior information using the input device 109 and may sequentially acquire the prior information via the input device interface 105.

The result determination unit 204 compares the degree-of-damage determination result from the degree-of-damage determination unit 202 with the prior information acquired by the prior information acquisition unit 203, to thereby determine whether the user needs to check the determination result. In the present exemplary embodiment, the result determination unit 204 compares the important class boundary information acquired as the prior information with the degree-of-damage determination result. Then, if the determination result indicates one of two classes adjacent to the important class boundary and the likelihood difference between the two classes is less than or equal to the threshold, the result determination unit 204 determines that the user needs to check the determination result.

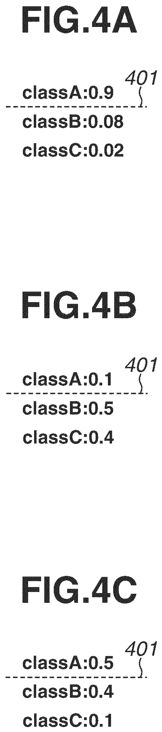

The determination processing to be performed by the result determination unit 204 will be described in detail with reference to examples illustrated in Figs. 4A to 4C. Figs. 4A to 4C each illustrate an output example of the degree-of-damage determination unit 202. As described above, in the present exemplary embodiment, the degree-of-damage determination unit 202 outputs the degree of damage with the likelihood of any one of three classes A to C. Further, in the present exemplary embodiment, a boundary 401 is set as the important class boundary, and class A and class B are adjacent to the boundary. The likelihood difference set as the threshold is 0.2.

In the example of Fig. 4A, the likelihood of class A that is one of the classes adjacent to the important class boundary is the highest likelihood of 0.9, and thus class A is output as the degree-of-damage determination result. The likelihood of class B that is the other of the classes adjacent to the important class boundary is 0.08, and the likelihood difference between class A and class B is 0.82; that is, because the likelihood difference is greater than the threshold likelihood difference of 0.2, the result determination unit 204 determines that the user does not need to check the determination result.

On the other hand, in the example of Fig. 4C, the likelihood of class A is 0.5, which is the maximum likelihood, and thus class A is output as the degree-of-damage determination result. The likelihood of class B is 0.4, and the likelihood difference between class A and class B is 0.1, which is smaller than the threshold likelihood difference of 0.2; accordingly, the result determination unit 204 determines that the user needs to check the determination result.

On the other hand, in the example of Fig. 4B, the likelihood of class B is 0.5, which is the maximum likelihood, and thus class B is output as the degree-of-damage determination result. Here, the likelihood difference between class B and class C is only 0.1; however, since class C is not adjacent to the important class boundary, the result determination unit 204 determines that the user does not need to check the determination result. In the case of Fig. 4B, even if class C is actually a correct determination result, class C is not adjacent to the important class boundary and thus deemed to have little influence on the user.

The output generation unit 205 generates supplementary information (hereinafter also referred to as auxiliary information) to assist the user in determination result checking and correction work based on the determination result from the result determination unit 204, and presents the auxiliary information to the user. The auxiliary information used herein refers to information about the content of comparison between the degree-of-damage determination result and the prior information, and in the present exemplary embodiment, the auxiliary information is, for example, information indicating the likelihood difference on the important class boundary as illustrated in Fig. 4C.

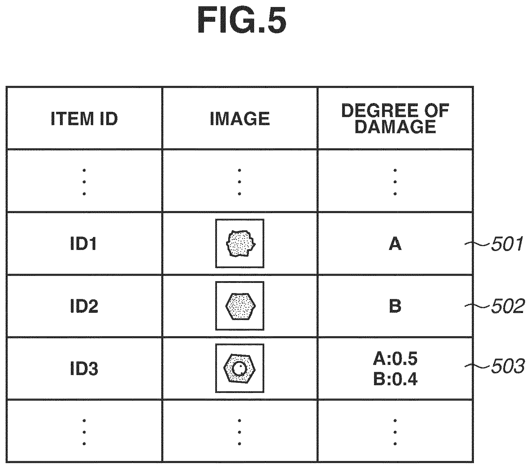

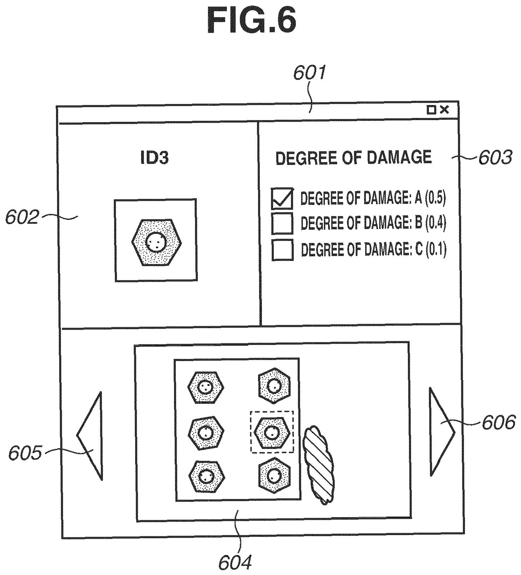

An example of an auxiliary information presenting method will now be described with reference to Figs. 5 and 6.

Fig. 5 is a list of degree-of-damage determination results. A degree-of-damage 501 and a degree-of-damage 502 are the degrees of damage corresponding to the determination results illustrated in Figs. 4A and 4B, respectively, and a degree-of-damage 503 is the degree of damage corresponding to the determination result illustrated in Fig. 4C. The output generation unit 205 displays the list as illustrated in Fig. 5 on the output device 110, thereby making it possible to present auxiliary information to the user.

Specifically, if the result determination unit 204 determines that the user does not need to check the determination result, the degree-of-damage determination result, such as the degree-of-damage 501 or the degree-of-damage 502, is presented as it is. On the other hand, in the present exemplary embodiment, if the likelihood difference on the important class boundary is less than or equal to the threshold and the result determination unit 204 determines that the user needs to check the determination result, the likelihoods of the two classes adjacent to the important class boundary are presented like the degree-of-damage 503. The information indicated by the degree-of-damage 503 is the auxiliary information.

In this manner, as to the determination target of the degree of damage displayed as indicated by the degree-of-damage 503, the user can proceed with the determination result checking work in consideration of the possibility that the other class may be the ground truth.

Further, as illustrated in Fig. 5, the image to be determined that corresponds to the image illustrated in Fig. 12 described above and is used by the degree-of-damage determination unit 202 may also be presented, to thereby enable the user to check the determination result while viewing the determination target. This configuration allows the user to efficiently check the determination results of a large number of determination targets. Additionally, in order to further increase the checking work efficiency, the determination result required to be checked by the user may be highlighted so that the user can notice the determination result from among a large number of determination results. For example, the determination result can be highlighted in the method of, for example, by displaying the normal determination result in black and displaying the determination result required to be checked in a different color such as red, using bold-type or large letters, or using a graphic or animation to highlight the determination result required to be checked.

Further, on the list as illustrated in Fig. 5, the determination results that are determined to be required to be checked by the user may be preferentially displayed in order from the top.

Additionally, although Fig. 5 illustrates the list of determination results, in some cases, it may be a case where it is difficult for the user to check the determination result without viewing the image of the determination target more carefully. Accordingly, for example, the detailed determination result as illustrated in Fig. 6 may be displayed on the output device 110, and auxiliary information may be presented to the user.

On a detailed determination result screen 601, an image 602 is a clipped image of the determination target. On a pane 603, the likelihood of each class of the degree of damage is displayed as auxiliary information about the determination target, and a checkbox for correction is also displayed together for each of them. An image 604 is an image including a peripheral area of the determination target, and the determination target is surrounded by a dotted frame. This configuration allows the user to check and correct the determination result while viewing the state of the peripheral area around the determination target.

If the user has checked the determination target and has determined that the degree-of-damage determination result is not correct, the user needs to correct the degree-of-damage determination result. In this case, as illustrated in the pane 603, providing a mechanism that enables the user to select contents to be corrected can reduce the load of the entire checking and correction work. In particular, as illustrated in Fig. 4C, if the likelihood difference on the important class boundary of the degree-of-damage determination result is small, there is a possibility that the degree of damage may be corrected to another class, for example, class B in Figs. 5 and 6. Accordingly, these classes can be presented as candidates for options, to thereby make it possible to assist the work that requires corrections. Thus, any auxiliary information may be presented, as long as the information enables the checking and correction work to be performed efficiently depending on the contents compared by the result determination unit 204.

Further, the determination result of the degree of damage that is determined to be required to be checked may be preferentially presented. For example, the degree-of-damage determination results of the determination targets as illustrated in Fig. 6 are displayed in order from the determination result that the result determination unit 204 determines required to be checked by the user by. Then, the user selects a back button 605 or a next button 606, thereby making it possible to change the display of the image 602, the pane 603 and the image 604 so that the user can check and correct another determination result. Also, the individual determination result illustrated in Fig. 6 may be displayed, for example, by selecting the determination result to be checked and corrected by the user on the list illustrated in Fig. 5.

The above-described method is not intended to limit the auxiliary information presenting method, and is merely an example of the method for presenting the comparison contents between the degree-of-damage determination result and the prior information as described above to the user as auxiliary information. Any display may be used as long as the display conceptually includes these display contents.

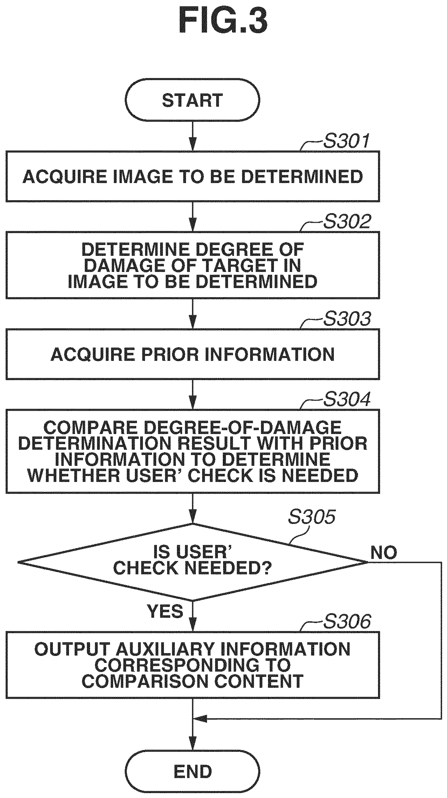

Next, a procedure for processing in the information processing apparatus according to the present exemplary embodiment will be described with reference to a flowchart of Fig. 3. Although, as described above, a large number of images are obtained by clipping the degree-of-damage determination targets in the present exemplary embodiment, this flow indicates processing for performing the degree-of-damage determination on one of the images. Results obtained by repeatedly performing the processing flow illustrated in Fig. 3 the number of times equal to the number of degree-of-damage determination target images are integrated and the integrated results as illustrated in Fig. 5 or Fig. 6 are finally displayed.

First, in step S301, the image acquisition unit 201 acquires the degree-of-damage determination target image from the external storage device 104. In the present exemplary embodiment, as described above, the degree-of-damage determination target is a member, such as a bolt, and the image acquisition unit 201 acquires a clipped image of the determination target.

In step S302, the degree-of-damage determination unit 202 uses the image to be determined acquired in step S301 as an input, determines the degree of damage of the determination target and outputs the determination result. In the present exemplary embodiment, as described above, the degree-of-damage determination unit 202 has been trained to determine the likelihood indicating that the determination target belongs to any one of the classes A to C each representing the degree of damage, and to output the likelihood as the degree-of-damage determination result.

In step S303, the prior information acquisition unit 203 acquires known prior information about the determination of the degree of damage of the determination target. In the present exemplary embodiment, as described above, the important class boundary information is acquired. In this case, like in the above-described example, the important class boundary is located between class A and class B and the threshold for the likelihood difference is 0.2.

In step S304, the result determination unit 204 uses the degree-of-damage determination result and the prior information obtained in step 302 and step S303, respectively, as inputs and compares the determination result with the prior information to thereby determine whether the user needs to check the degree-of-damage determination result. In the present exemplary embodiment, as described above, in a case where the output of the degree-of-damage determination unit 202 is as illustrated in Fig. 4C, the likelihood of class A that is one of the classes adjacent to the important class boundary is 0.5, which is the maximum likelihood, and the likelihood of class B, which is the other of the classes adjacent to the important class boundary, is 0.4. Since the likelihood difference between class A and class B is 0.1 and the likelihood difference is smaller than the likelihood difference threshold of 0.2 that is acquired as the important class boundary information, the result determination unit 204 determines that the user needs to check the degree-of-damage determination result.

In step S305, if the result determination unit 204 determines that the user needs to check the degree-of-damage determination result, the processing proceeds to step S306. On the other hand, if the result determination unit 204 determines that the user does not need to check the determination result, the processing in this flowchart is terminated, the degree-of-damage determination result is output, and then, as described above, the processing in this flowchart is repeatedly performed on the remaining images.

In step S306, the output generation unit 205 acquires the contents compared in step S304, and outputs the contents as auxiliary information to assist the user to conduct the checking work. In the present exemplary embodiment, as described above, for example, like the degree-of-damage 503 illustrated in Fig. 5, information such as the output likelihood on the important class boundary is displayed on a screen or the like for the user to check the degree-of-damage determination result.

As described above, the information processing apparatus compares the degree-of-damage determination result with the important class boundary information acquired as prior information, and if the likelihood difference on the important class boundary is less than or equal to the threshold, the information processing apparatus determines that the user's check is required and presents information about the likelihood or the like to the user as auxiliary information. Consequently, it can be expected that a serious issue related to the intended use, which is caused by a mistake in the degree-of-damage determination on the important class boundary, can be easily prevented from occurring.

### (Second Exemplary Embodiment)

In the following exemplary embodiment, redundant descriptions of parts similar to those of the first exemplary embodiment are omitted and only parts different from the first exemplary embodiment will be described. A hardware configuration of an information processing apparatus according to the exemplary embodiments described below is similar to the hardware configuration of the information processing apparatus according to the first exemplary embodiment.

In the first exemplary embodiment, the prior information acquisition unit 203 acquires important class boundary information as prior information. On the other hand, in the present exemplary embodiment, for example, determination information about the degree of damage of each determination target is stored and managed in the external storage device 104. Then, in step S303 illustrated in Fig. 3, the prior information acquisition unit 203 acquires previous determination information about the degree of damage of the same determination target as prior information. The previous determination information about the degree of damage used herein refers to information about, for example, a class indicating the degree of damage in previous determination, and a date and time when the degree-of-damage determination is performed. Additionally, in a case where the degree-of-damage determination is previously performed a plurality of times, only the latest degree-of-damage determination information may be acquired as prior information.

In this case, in steps S304 and S305, the result determination unit 204 compares the current determination result of the degree of damage with the prior information, and if there is inconsistency due to change over time as described below, the result determination unit 204 determines that the user needs to check the determination result. The result determination unit 204 may determine that there is inconsistency, and the user needs to check the determination result, for example, if the current class of the degree damage is improved from the previous determination result of the degree of damage although a repair or the like is not performed.

Further, in the classes of the degree of damage that have an order relation, the class may change to the adjacent class, so that it may be determined that there is inconsistency if the class is improved to a class that is apart from the class by a certain class or more.

Also, there is a possibility that the class can be improved by a repair; accordingly, when storing and managing the determination result of the degree-of-damage determination target, information indicating whether a repair is performed may also be managed, and the information indicating whether a repair is performed may also be acquired when the determination information is acquired as the prior information. In this case, the result determination unit 204 may determine that there is inconsistency during comparison with prior information if the class of the degree of damage is improved even there is no record about a repair. This configuration makes it possible to limit the targets to be checked by the user, and further improvement in user's work efficiency can be expected.

Further, the inconsistency is not limited to that described above, as long as there is inconsistency with the previous determination result of the degree of damage. For example, the general progress of degradation in the degree of damage and the period of the progress are preliminarily set in the result determination unit 204. In a case where, for example, a change in the class of the degree of damage and the elapsed time indicate that degradation has been progressed in a period shorter than the set period, the result determination unit 204 may determine that there is no consistency with the normal process of degradation or damage, thereby determining that the user needs to check the determination result.

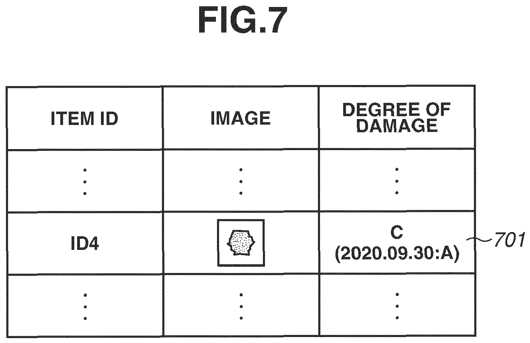

In this manner, if there is inconsistency as described above as a result of comparison between the degree-of-damage determination result and the prior information, in step S306, the output generation unit 205 presents the information at the time of the previous determination of the degree of damage, which is used for the comparison, as auxiliary information. For example, as for the list illustrated in Fig. 5 described above in the first exemplary embodiment, such an output as illustrated in Fig. 7 may be presented. Specifically, in a degree-of-damage 701, not only class "C" as the current determination result of the degree of damage but also "2020.09.30" as a previous degree-of-damage determination date and time and class "A" as the previous determination result are presented. This enables the user to compare the previous determination result with the current determination result and to efficiently recognize that the class of the current degree-of-damage determination is naturally improved from that in the previous degree-of-damage determination, that is, the class of the degree of damage is changed from "A" to "C".

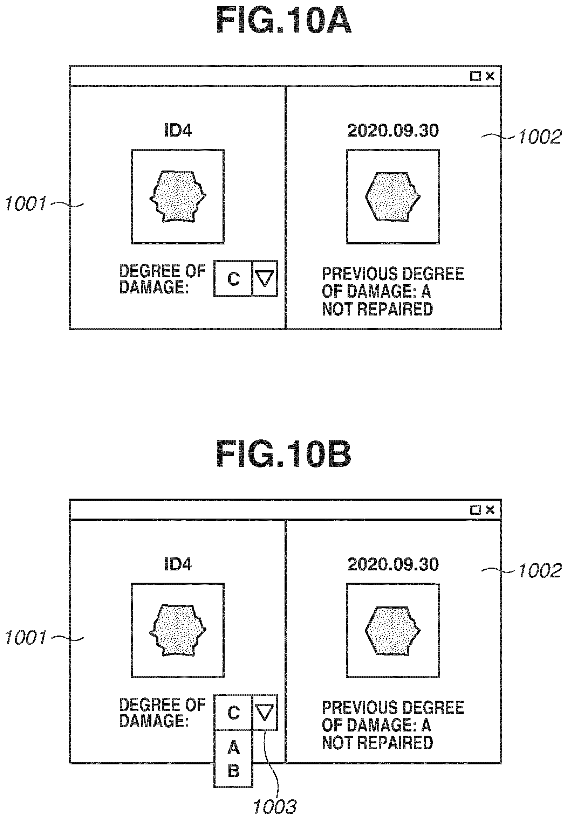

Further, the output method is not limited to the display of the list as illustrated in Fig. 5 and may be an individual display as illustrated in Fig. 6 described above. Alternatively, since the inconsistency content indicates inconsistency with the previous degree-of-damage determination result, comparison contents as illustrated in Figs. 10A and 10B may be displayed, as long as the image to be determined used during the previous determination can be acquired. Because a change over time is generally important in the inspection work, images used for determination are generally stored and managed together with the determination result as a part of the previous degree-of-damage determination result. Accordingly, the stored and managed images may be acquired. A pane 1001 illustrated in Fig. 10A displays the current image of the degree-of-damage determination target and the determination result, and a pane 1002 displays the image of the same determination target in the previous degree-of-damage determination, the determination result, the day when the determination is performed, and information indicating whether the determination target is repaired.

Although, on the pane 1001, class "C" is presented as the current determination result of the degree of damage, there is a possibility that the determination result may be incorrect, and the user may correct the determination result. Fig. 10B illustrates a state where a pull-down list 1003 is provided to correct the degree-of-damage determination result. This pull-down list 1003 presents candidates for the degree-of-damage determination results to the user, and the user can easily correct the degree of damage by selecting a candidate. In this case, the candidates for the degree-of-damage determination results on the pull-down list may be displayed such that the class of the degree of damage that is most likely to be selected by the user is displayed at the top, thereby enabling the user to easily select the class. For example, in the present exemplary embodiment, auxiliary information is presented to check and correct inconsistency in the result showing an improvement with time although a repair or the like is not performed, and thus at least the class at the time of the previous determination is presented as the highest class on the pull-down list. The pull-down list 1003 illustrated in Fig. 10B illustrates a state where class "A" of the previous degree of damage is displayed as the highest class on the pull-down list.

### (Third Exemplary Embodiment)

In the first exemplary embodiment, the description is given of an example where images of bolts, which are members subjected to the degree-of-damage determination, are clipped out in advance by a manual operation and the images are stored and managed in the external storage device 104. In this case, it can be said that the member that is the degree-of-damage determination target is always captured in the image. Accordingly, in the present exemplary embodiment, the prior information acquisition unit 203 acquires information indicating that the determination target is always present in the image (hereinafter referred to as presence information) as prior information.

In addition, there may be another case where the degree-of-damage determination target is always present in the image, and it can be said that the determination target is always present, for example, in a case where there is a limitation on work during image acquisition such as a case where a photographer is required to capture images of members at the site of work such that each member is located at the center of the image. In the case of clipping an image of the determination target in advance by a manual operation or in a case where there is the limitation on work, the presence information is known in advance, so that the presence information is preliminarily associated with the image acquired according to the present exemplary embodiment, and stored and managed in the external storage device 104. With this configuration, the prior information acquisition unit 203 can acquire the presence information as prior information in step S303 of Fig. 3.

While, in the present exemplary embodiment, the result determination unit 204 acquires the presence information as prior information, the degree-of-damage determination result of the determination target cannot be obtained from the degree-of-damage determination unit 202 in some cases. In this case, there is such inconsistency that the determination result cannot be obtained although the determination target is present. Then, in step S304, the result determination unit 204 determines that the user needs to check the determination result if such inconsistency has occurred.

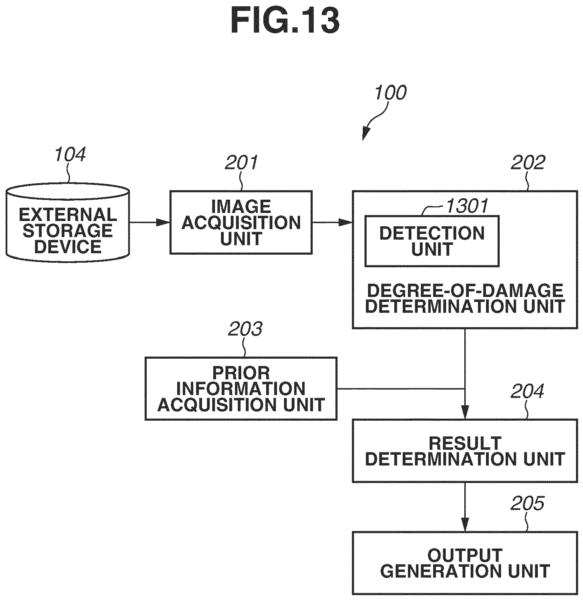

Further, the degree-of-damage determination unit 202 described above in the first exemplary embodiment outputs the determination result, assuming that the degree of damage of the determination target belongs to any of the classes. In the present exemplary embodiment, as illustrated in Fig. 13, the degree-of-damage determination unit 202 further includes a detection unit 1301 that identifies a location or the like where the determination target is included, from the input image. Then, in a case where the detection unit 1301 cannot detect the determination target from the image to be determined, the degree-of-damage determination unit 202 determines that the degree-of-damage determination result cannot be obtained. Additionally, like the degree-of-damage determination unit 202, the detection unit 1301 may be a generally known detector (Faster R-CNN, SSD, YOLO, etc.) using a CNN as described above.

In this case, as described above, a structure such as an infrastructure can degrade or be damaged, which cannot be expected during training, depending on the type of each member or the environment. In this case, the detection unit 1301 fails in the detection and cannot obtain the degree-of-damage determination result.

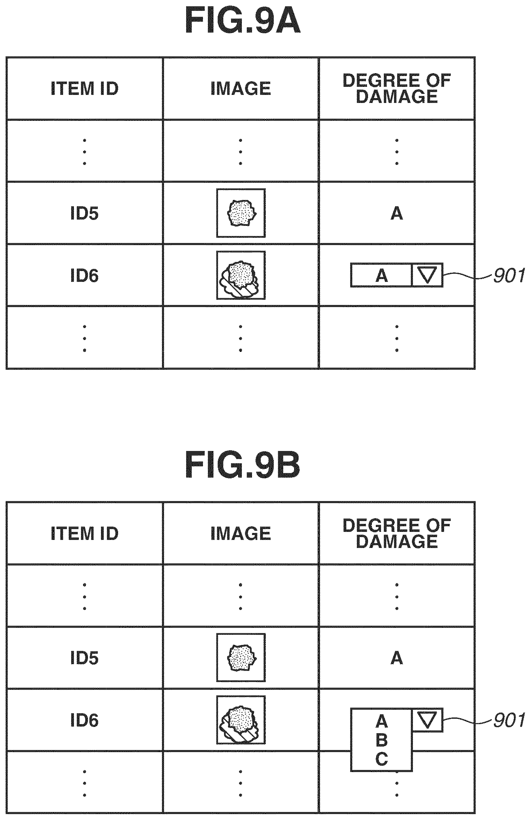

In step S306, the output generation unit 205 outputs, as auxiliary information, information indicating that the degree-of-damage determination result cannot be obtained even if the image to be determined, in which the determination target is present, is input. Like in the example of Fig. 5 described above in the first exemplary embodiment, the determination result to be checked by the user may be displayed in a distinguishable manner so that the user can easily find the determination result from among a large number of degree-of-damage determination results, for example, by highlighting the determination result. On the other hand, in the present exemplary embodiment, the degree-of-damage determination result is not obtained and the determination result is not determined, so that the user needs to check the determination result and input any one of the classes. Accordingly, for example, as indicated by a pull-down list 901 illustrated in Fig. 9A, the classes are displayed such that the user can give an input. Further, since the determination target that is to be always present in the image cannot be detected, there is a possibility that the determination target can be in an unexpected state; therefore, the highest degree of damage may be presented as an initial value. In Fig. 9A, class A as the highest degree of damage is presented in advance. Furthermore, as illustrated in Fig. 9B, when the pull-down list 901 is open, the classes may be displayed in descending order of the degree of damage.

As described above, in a case where there are a large number of degree-of-damage determination results to be checked by the user, it is highly burdensome for the user to perform the work of checking and correcting the degree of damage, thus it can be expected that the load on the user can be further reduced by presenting the initial value.

### (Fourth Exemplary Embodiment)

In the third exemplary embodiment, the description is given of an example where an image clipped out in advance by a manual operation is used as an image subjected to the degree-of-damage determination, and presence information is acquired as prior information. On the other hand, in the present exemplary embodiment, for example, an image region corresponding to a member portion illustrated in a drawing of a structure to be inspected is clipped out of an image associated with the drawing, and the image is used as the image to be determined, thereby obtaining presence information indicating that the determination target is always present in the image as prior information. The subsequent processing can be carried out in the same manner as in the third exemplary embodiment.

Further, the method for associating the drawing with the image is not particularly limited and the drawing and the image may be associated in advance by a manual operation or may be associated by capturing an image including an identifiable portion as a landmark. Alternatively, the drawing and the image may be associated based on imaging position coordinates, camera orientation, or the like.

### (Fifth Exemplary Embodiment)

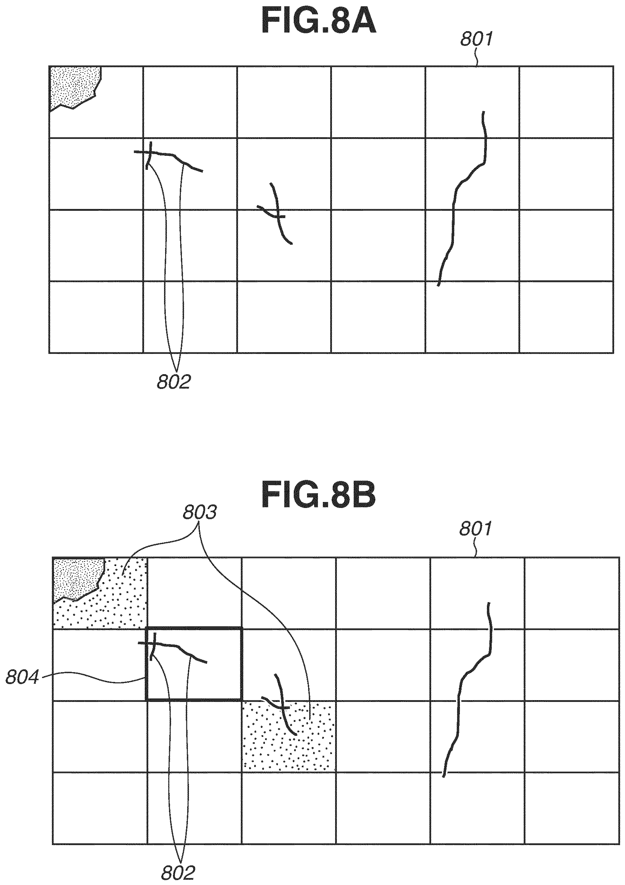

In the first exemplary embodiment, the description is given of an example where the degree of damage of a bolt, which is a member subjected to the degree-of-damage determination, is determined, however, the determination target is not limited to a part such as a bolt. For example, the degree-of-damage determination unit 202 may determine the degree of damage of a concrete wall surface. In the present exemplary embodiment, an example where the degree of damage of a concrete wall surface is determined will be described with reference to the flowchart of Fig. 3 and Figs. 8A and 8B.

An image 801 illustrated in Fig. 8A is an image presenting the entirety of a concrete wall surface, and dividing lines for dividing the image 801 into areas with a size on which the degree-of-damage determination can be performed are displayed. Each divided image is hereinafter referred to as a patch image. In the example of Fig. 8A, patch images can be obtained by dividing the image into 4 × 6 in height and width, respectively. In the present exemplary embodiment, a defect portion due to a crack or water leakage is preliminarily detected from the patch images of the wall surface. Further, the defect portion is detected in advance before the processing illustrated in Fig. 3 is started, and the detection processing may be performed by the information processing apparatus 100 or another apparatus. The defect portion detection result (hereinafter, defect information) is stored and managed in the external storage device 104.

In step S301, the image acquisition unit 201 acquires a patch image as a determination target from the external storage device 104, and also acquires defect information. Then, in step S302, the degree-of-damage determination unit 202 determines the degree of damage of the wall surface based on the defect information. Fig. 8A illustrates a defect 802 as a detected crack defect, and in step S303, the prior information acquisition unit 203 acquires the detected defect information separately as prior information. Then, in step S304, the result determination unit 204 acquires and compares the degree-of-damage determination result and the defect information.

In the present exemplary embodiment, in step S305, in a case where the degree of damage is less than or equal to the threshold, for example, a case where the degree-of-damage determination unit 202 outputs "no damage" even when a defect is detected, the result determination unit 204 determines that the user needs to check the determination result. In this case, the output generation unit 205 presents the both comparison results as the auxiliary information, and for example, as illustrated in Fig. 8B, the degree-of-damage determination result on each patch of the entire wall surface and the defect information are displayed in a superimposed manner. Like patches 803, the patches that are determined to be "damaged" by the degree-of-damage determination unit 202 are highlighted, for example, by coloring the patches. In this case, a patch 804 is not colored, unlike the patch 803, although the patch 804 includes the crack defect 802, and this indicates the state it is determined as "not damaged", thus the user can check the defect portion.

Further, to facilitate the user to more easily find the defect portion from a large number of patches, patch images may be highlighted so that the patches required to be checked can be distinguished from the patches that are not required to be checked. For example, like the patch 804 illustrated in Fig. 8B, the patch may be highlighted, for example, by surrounding the patch required to be checked with a thick frame. This configuration facilitates the user to check whether there is a failure in determination of the degree of damage of the wall surface.

Furthermore, while an example of inconsistency where it is determined as "not damaged" although a defect is detected is described above, the present invention is not limited to this example. Also, in a case where the determination result indicating "damaged" is output although no detect is detected, the determination result is also required to be checked by the user, and thus the determination result may be highlighted in the same manner as described above.

As described above, according to the present exemplary embodiment, as to a damage on a concrete wall surface, auxiliary information used for the user to perform checking and correction can be also obtained based on the degree-of-damage determination result and prior art information. Although, in the present exemplary embodiment, a concrete wall surface is described by way of example, the present exemplary embodiment may be applied to any other wall surface, such as a mortar wall surface, as long as a defect portion such as a crack or water leakage can occur on the wall surface.

### (Sixth Exemplary Embodiment)

In the first exemplary embodiment, the determination as to whether the user needs to check the degree-of-damage determination result uses the likelihood difference between two classes adjacent to the important class boundary. If the likelihoods of degree-of-damage classes having an order relation in adjacent classes are close to each other, the determination result of the degree-of-damage determination unit 202 may be unclear as described above. Meanwhile, in a case where the classes are not adjacent to each other and are apart from each other, if the likelihood difference between the classes is small, the degree-of-damage determination on the classes having an order relation cannot be accurately performed in some cases. Accordingly, a threshold for the likelihood difference between classes that are not adjacent to each other may be acquired as prior information. For example, the likelihood of the class indicating the highest likelihood as the determination result and the likelihood of a class that is not adjacent to the class may be obtained, and if the likelihood difference between the classes is less than or equal to the threshold, the result determination unit 204 may determine that the user needs to check the determination result.

### (Seventh Exemplary Embodiment)

In the first exemplary embodiment, the description is given of an example where the likelihood difference on the important class boundary is presented as auxiliary information. Presenting the likelihood difference enables the user to recognize how the determination result is unclear, which is useful as auxiliary information for the user to check the determination result. However, there may be case where there is no need to present the likelihood difference to some users, and the auxiliary information only needs to present how the determination result is unclear. In this case, for example, only two classes in which the determination result is unclear may be presented, or a message indicating "the degree-of-damage determination result is unclear" may be presented.

### (Eighth Exemplary Embodiment)

While, in the above-described exemplary embodiments, the descriptions are given of processing for presenting each piece of auxiliary information for each type of prior information, various types of auxiliary information may be presented in a mixed manner. Hereinafter, an example of processing for presenting various types of auxiliary information will be described below with reference to the flowchart of Fig. 3.

In step S303 of Fig. 3, the prior information acquisition unit 203 acquires various types of prior information. For example, the important class boundary information and presence information are acquired as prior information. After that, in steps S304 and S305, the result determination unit 204 compares the determination results with various types of prior information, to thereby determine whether the user needs to check the determination result.

In step S306, the output generation unit 205 creates auxiliary information for the determination result that is determined to be required to be checked by the user. When the output generation unit 205 generates various types of auxiliary information, the output generation unit 205 may include, in the auxiliary information, information based on which how the auxiliary information is obtained can be discriminated. For example, the determination results are presented in a distinguishable manner such that information indicating "degree-of-damage determination result is unclear" may be included for the determination result required to be checked if the important class boundary information is obtained as the prior information, or information indicating "required to check whether the determination target is present" may be included for the determination result required to be checked if the presence information is obtained as the prior information.

The presenting method is not particularly limited, and the above-described character information may be displayed to distinguish the determination results from each other, or different colors may be assigned to respective pieces of character information to distinguish the determination results from each other. Alternatively, different icons are assigned to the respective pieces of information to be presented to thereby distinguish the determination results from each other. This configuration allows the user to recognize the perspective from which the user checks the target, whereby an improvement in the work efficiency can be expected.

### (Other Exemplary Embodiments)

The present invention can also be implemented by processing in which a program for implementing one or more functions according to the above-described exemplary embodiments is supplied to a system or apparatus via a network or storage medium, and one or more processors in a computer of the system or apparatus read out and execute the program. The present invention can also be implemented by a circuit (e.g., an application specific integrated circuit (ASIC)) for implementing one or more functions.

The present invention is not limited to the above-described exemplary embodiments, and various alterations and modifications can be made without departing from the spirit and scope of the present invention. Accordingly, the following claims are appended to disclose the scope of the present invention.

This application claims priority from Japanese Patent Application No. 2021-095611 filed June 8, 2021, which is hereby incorporated by reference herein.

## Claims

1. An information processing apparatus comprising:
an image acquisition unit configured to acquire an image of a determination target;
a degree-of-damage determination unit configured to determine a degree of damage of the determination target from the image of the determination target;
a prior information acquisition unit configured to acquire at least one of prior information about determination by the degree-of-damage determination unit and prior information about the determination target;
a result determination unit configured to determine whether a user of an output device needs to check the determination result by comparing the determination result from the degree-of-damage determination unit with the at least one prior information; and
an output generation unit configured to generate, in a case where the result determination unit determines that the user needs to check the determination result, auxiliary information to assist the user in checking based on the compared information, and output the auxiliary information to the output device.

2. The information processing apparatus according to Claim 1,
wherein the degree-of-damage determination units outputs a likelihood of a plurality of degrees of damage as the determination result,
wherein the prior information acquisition unit acquires, as the prior information about the determination by the degree-of-damage determination unit, information indicating a threshold for a likelihood difference between two degrees of damage among the plurality of degrees of damage, and
wherein, in a case where one of the two degrees of damage indicates a highest likelihood and the likelihood difference between the two degrees of damage is compared with the threshold and less than or equal to the threshold, the result determination unit determines that the user needs to check the determination result.

3. The information processing apparatus according to Claim 1,
wherein the degree-of-damage determination unit outputs a likelihood of a plurality of degrees of damage as the determination result,
wherein the prior information acquisition unit acquires, as the prior information about the determination by the degree-of-damage determination unit, information indicating a predetermined boundary among boundaries of the plurality of degrees of damage and a threshold for a likelihood difference between two degrees of damage adjacent to the predetermined boundary, and
wherein in a case where one of the two degrees of damage indicates a highest likelihood and the likelihood difference between the two degrees of damage is compared with the threshold and less than or equal to the threshold, the result determination unit determines that the user needs to check the determination result.

4. The information processing apparatus according to Claim 3, wherein the output generation unit generates information indicating the two degrees of damage adjacent to the boundary and likelihoods of the two degrees of damage, and outputs the generated information.

5. The information processing apparatus according to any one of Claims 2 to 4, wherein the output generation unit generates information to present a message indicating that the determination result is unclear, and outputs the generated information.

6. The information processing apparatus according to Claim 1,
wherein the prior information acquisition unit acquires, as the prior information about the determination target, information about a previous determination result of the degree of damage of the determination target, and
wherein, in a case where a current determination result from the degree-of-damage determination unit is compared with the previous determination result and there is inconsistency in change over time therebetween, the result determination unit determines that the user needs to check the current determination result.

7. The information processing apparatus according to Claim 6,
wherein the prior information about the determination target further includes information indicating whether the determination target is repaired after the previous determination result is obtained, and
wherein, in a case where the current determination result is compared with the previous determination result and there is inconsistency in change over time therebetween including the information indicating whether the determination target is repaired, the result determination unit determines that the user needs to check the current determination result.

8. The information processing apparatus according to Claim 7, wherein, in a case where the determination target is not repaired and the current determination result is improved from the previous determination result, the result determination unit determines that the user needs to check the current determination result.

9. The information processing apparatus according to any one of Claims 6 to 8, wherein the output generation unit generates information indicating a result of comparison between the previous determination result and the current determination result, and outputs the generated information.

10. The information processing apparatus according to Claim 1,
wherein the prior information acquisition unit acquires, as the prior information about the determination target, information indicating that the determination target is present in the image of the determination target acquired by the image acquisition unit, and
wherein in a case where the information indicating that the determination target is present is acquired and no determination result is obtained by the degree-of-damage determination unit, the result determination unit determines that the user needs to check the determination result.

11. The information processing apparatus according to Claim 10, wherein the output generation unit outputs information indicating a highest degree of damage as an initial value.

12. The information processing apparatus according to Claim 1,
wherein the prior information acquisition unit acquires, as the prior information about the determination target, defect information about a defect portion detected in the determination target,
wherein the degree-of-damage determination unit determines the degree of damage of the determination target based on the defect information and the image of the determination target, and
wherein, in a case where a defect is detected in the determination target based on comparison between the prior information about the determination target and the determination result and the degree of damage of the determination target is less than or equal to a threshold, the result determination unit determines that the user needs to check the determination result.

13. The information processing apparatus according to Claim 12, wherein the output generation unit generates information indicating both the defect information and the determination result, and outputs the generated information.

14. The information processing apparatus according to Claim 12, wherein the output generation unit generates information to display the defect information and the determination result in a superimposed manner, and outputs the generated information.

15. The information processing apparatus according to any one of Claims 1 to 14, wherein the determination target is a wall surface.

16. The information processing apparatus according to Claim 15, wherein the determination target is a concrete wall surface.

17. The information processing apparatus according to any one of Claims 1 to 16,
wherein the image acquisition unit acquires images of a plurality of determination targets,
wherein the degree-of-damage determination unit determines respective degrees of damage of the plurality of determination targets based on the images of the plurality of determination targets,
wherein, for each of the plurality of determination targets, the result determination unit determines whether the user needs to check the determination result, and
wherein the output generation unit outputs auxiliary information to preferentially present a determination result determined to be required to be checked by the user by the result determination unit.

18. The information processing apparatus according to any one of Claims 1 to 16,
wherein the image acquisition unit acquires images of a plurality of determination targets,
wherein the degree-of-damage determination unit determines respective degrees of damage of the plurality of determination targets based on the images of the plurality of determination targets,
wherein, for each of the plurality of determination targets, the result determination unit determines whether the user needs to check the determination result, and
wherein the output generation unit outputs auxiliary information to present the determination result determined to be required to be checked by the user by the result determination unit by highlighting the determination result.

19. An information processing method comprising:
an image acquisition step of acquiring an image of a determination target;
a degree-of-damage determination step of determining a degree of damage of the determination target based on the image of the determination target;
a prior information acquisition step of acquiring at least one of prior information about determination in the degree-of-damage determination step and prior information about the determination target;
a result determination step of determining whether a user of an output device needs to check the determination result by comparing the determination in the degree-of-damage determination step with the at least one prior information; and
an output generation step of generating, in a case where it is determined that the user needs to check the determination result in the result determination step, auxiliary information to assist the user in checking based on the compared information, and outputting the auxiliary information to the output device.

20. A program for causing a computer to execute:
an image acquisition step of acquiring an image of a determination target;
a degree-of-damage determination step of determining a degree of damage of the determination target based on the image of the determination target;
a prior information acquisition step of acquiring at least one of prior information about determination in the degree-of-damage determination step and prior information about the determination target;
a result determination step of determining whether a user of an output device needs to check the determination result by comparing the determination in the degree-of-damage determination step with the prior information; and
an output generation step of generating, in a case where it is determined that the user needs to check the determination result in the result determination step, auxiliary information to assist the user to check the determination result based on the compared information, and outputting the auxiliary information to the output device.
